Europäisches Patentamt

European Patent Office

Office européen des brevets

(11) Publication number: 0 633 563 A2

# EUROPEAN PATENT APPLICATION

(21) Application number: 94202793.9

(22) Date of filing: 04.05.89

(51) Int. Cl.6: G11B 5/56

This application was filed on 27 - 09 - 1994 as a divisional application to the application mentioned under INID code 60.

(30) Priority: 04.05.88 GB 8810461

(43) Date of publication of application:
11.01.95 Bulletin 95/02

(60) Publication number of the earlier application in accordance with Art.76 EPC: 0 412 993

(84) Designated Contracting States:
DE FR GB

(71) Applicant: M4 DATA LIMITED
Mendip Court, Bath Road
Wells, Somerset BA5 3DH (GB)

(72) Inventor: Gordon, Norman
9 Wheeler Grove
Wells,
Somerset (GB)
Inventor: Elliot, Robert Vernon
Bridge House,
Pound Lane,
Easton
Wells,
Somerset (GB)
Inventor: Donkin, Charles William
Rectory Cottage,
Dinder
Wells,
Somerset (GB)
Inventor: Corbett, Aubrey Edward
1 Ashfield Road
Kenilworth,
Warwickshire CU8 2BE (GB)

(74) Representative: Targett, Kenneth Stanley et al
D. Young & Co.,
21 New Fetter Lane
London EC4A 1DA (GB)

(54) Tape drive machines.

(57) In a tape drive machine, in order to allow the position of a tape head 80 to be moved laterally across the tape and to allow the azimuth angle of the tape head to be adjusted independently of the lateral position, but using a single motor 92, the motor 92 drives a pair of gears 86, 88, one of which is fixed to an indexing screw 84, but the other of which is connected to another indexing screw 82 via a backlash device 94.

The specification also describes a path for the tape, threading of the tape, the drive motor, construction of a motor stator, and detection of the beginning and end of tape.

FIG.2.

# 1. INTRODUCTION

This invention relates to tape drive machines for magnetic or optical tape, or other types of data storage tape. Various aspects of the invention are concerned with indexing of a tape drive head, an improved tape path through a tape drive machine, threading of the tape into the tape drive machine, a tape drive motor, a construction of motor stator and a dual performance motor. In this specification, the tape drive apparatus may be described in one particular orientation, but the claims should be interpreted to cover the apparatus whether in that orientation or bodily turned, for example, through a right angle.

## 1.1 Head Indexing

It is common to record data on a magnetic tape in a plurality of tracks spaced apart across the width of the tape. In order to write to or read from the plurality of tracks, either a multi-track head may be used, or alternatively a single track head may indexed across the width of the tape to the appropriate position. The drive to move the head may be provided by a stepper motor, or a DC motor and encoder, and an appropriate gear mechanism. It is also common to provide for azimuth adjustment of the head. In a basic arrangement, a manual azimuth adjustment is provided, and the azimuth angle of the head is set when the machine is built, and can be adjusted when the machine is serviced.

This aspect of the invention is concerned with enabling a more compact arrangement to be provided to serve the purpose of indexing the head across the tape and also adjusting the azimuth angle of the head. In accordance with this aspect of the invention, there is provided a data head indexing system comprising a reversible motor, and first and second mechanisms driven by the motor for indexing first and second portions, respectively, of the head in opposite directions across a recording medium, the first mechanism incorporating a backlash device so that, as the mechanisms drive the head in unison, the head is bodily moved across the recording medium, but so that, as the backlash of the backlash device is being taken up, the second mechanism alone moves the first portion of the head to adjust the azimuth angle of the head relative to the recording medium. Thus, the system provides for indexing and azimuth adjustment with the use of only a single motor.

The system preferably also includes means for controlling the motor, the control means being operable when moving the head in one direction to cause the motor to drive the second mechanism in one direction and take up the backlash in the first mechanism and then to drive the first and second mechanisms in unison in said one direction to move the head in said one direction, and then to drive the second mechanism in the opposite direction while there is backlash in the first mechanism to achieve a desired azimuth angle of the head. Conversely, the control means is preferably operable when moving head in the opposite direction to cause the motor to drive the second mechanism in the opposite direction and take up backlash in the first mechanism and then to drive the first and second mechanisms in unison in said opposite direction to move the head in said opposite direction, and then to drive the second mechanism in said one direction whilst there is backlash in the first mechanism to achieve a desired azimuth angle of the head.

## 1.2 Tape Drive Motor

This aspect of the invention is concerned with providing a motor of small axial length, thus making the motor particularly suitable for fitting into a half-height 5 1/4" profile between the tape cartridge and the bottom plate of the enclosure.

Typically, the rotor of an electric motor is mounted in the motor housing by two bearings, and for precision motors, it is also necessary to provide some means, such as a spring or shims, to take up any end play in the rotor.

In order to enable the axial length of the motor to be shortened, this aspect of the invention provides an electric motor comprising a stator and a rotor, the rotor being mounted to the stator by a single bearing assembly, and the arrangement being such that, in operation, the magnetic field acting between the stator and the rotor has a substantial component in the axial direction of the rotor, so that the rotor exerts an axial force on the bearing.

Preferably, the bearing is a ball bearing assembly. Any play between the balls and the raceways of the bearing assembly, which would otherwise allow axial movement and tilting of the rotor relative to the strator, is taken up when the motor is operational by the axial component of the magnetic field.

Preferably, the diameter of the bearing assembly is a substantial proportion such as at least a quarter, and more preferably about one half, of the overall diametrical size of the motor, in order to reduce the possible tilting of rotor. The balls of the bearing are preferably of small diameter relative to the diameter of the path they follow, for example in the ratio of 1:10, or less.

## 1.3 Stator Construction

This aspect of the invention is concerned with constructing a stator winding assembly for use in a flat profile motor. The method comprises the steps of arranging a plurality of winding coils in a first ring as a first tier, arranging a further plurality of winding coils in a second ring as a second tier on the first tier so that the windings of the second tier are angularly off-set relative to the windings of the first tier. This aspect of the invention is characterised in that the two tiers are pressed together to deform the windings so that portions of the windings of each tier are interleaved with portions of the windings of the other tier. The windings are then secured together.

This construction method provides a compact and strong stator assembly.

The stator may be constructed from more than two tiers following the principles described above.

Preferably, the winding coils are coated with a heat-curable material prior to arranging the coils in the tiers, and after pressing the coils together the assembly is heated in order to cure the material and thus bond the winding coils together. A dough moulding compound (DMC) or other form of encapsulation ensures a rigid structure.

### 1.4 Tape Edge Detection

It is known in a tape drive machine to attempt to ensure that the position of the head transversely across the tape is accurately set by guiding one edge of the tape with respect to a reference surface such as a fixed flange on a roller which also has a light spring-loaded flange so that the opposite edges of the tape are squeezed between the flanges. The position of the head is set with respect to the reference flange or a further reference surface fixed with respect to the reference flange. A problem with this known arrangement is that errors can still arise, for example, due to the tape not being fed in a direction perpendicular to the axis of the roller. Also the spring loaded flange of the reference roller tends to damage or increase wear of the tape.

In accordance with this aspect of the invention there is provided a tape drive machine comprising a head, means to drive a tape from one reel to another past the head, means to detect the position of an edge of the tape in a direction transverse to the tape at a location adjacent the head and means to adjust the transverse position of the head and the tape relative to each other in dependence upon the sensed edge position.

In a preferred embodiment, the detecting means comprises means to project a beam of light across the edge of the tape, and a light sensor arranged to sense the beam and such that the tape casts a shadow on the sensor, the sensor producing an output signal dependent upon the position of the shadow on the sensor. Preferably the distance between the tape and the sensor is substantially greater than that between the source and the tape, so that movement of tape in the transverse direction is amplified as movement of the shadow. For further sensitivity, the beam preferably has a small dimension in the direction transverse to the tape at the source of the beam and diverges from the source. Conveniently, the source of the beam may be a laser diode. The sensor may include means to compensate for variations in the intensity of the beam.

### 1.5 Beginning and/or End of Tape Detection

It is necessary in a tape machine to be able to detect when the beginning of the tape is approaching on reverse wind, or the end of the tape is approaching on forward wind. In one known method, the stations of the supply and/or take-up reel are counted up and down, and nearing of the beginning or end of the tape can then be determined. This method has the drawback, however, that in the case of power loss, the count will also be lost unless a non-volatile memory is employed. If the count is lost, then the machine must be operated at very low speed to return to the beginning of the tape where some other means may be utilised to detect the very beginning of the tape, such as data written on the tape, a sensor which detects a reflective end portion of the tape, or the leader block being pulled out of its recess in the take-up reel.

In accordance with this aspect of the invention, there is provided a tape drive machine operable to wind tape between a pair of reels and having:
means to provide a signal indicative of the linear speed of the tape between the two reels;
means to provide a signal indicative of the angular speed of one of the reels; and
means to determine from the tape speed signal and the reel speed signal, when less than a predetermined amount of tape remains on said one reel.

Because there is a predetermined relation between the angular speed of the reel and the linear speed of the tape when the reel is empty (i.e. the linear speed is equal to the reel radius multiplied by the angular speed), the beginning or end of tape can be detected without needing to count the reel revolutions.

Preferably, the machine further comprises means to provide a signal indicative of the angular speed of the other reel, and means to determine, from the tape speed signal and the other reel speed signal, when a predetermined amount of tape remains on said other reel. Thus both the beginning and end of the tape can be simply detected.

The machine may further comprise means to control rotation of the reels in dependence upon result of the determination(s) made by the determining means. For example, upon a fast rewind operation the reels may be reduced to a slow speed when the beginning of the tape is detected, and upon a fast forward winding operation the reels may be reduced to a slow speed when the end of the tape is detected.

## 1.6 Last Turn Detection

As mentioned above, it is known to detect when the very beginning of the tape is reached either by marker data written on the tape or a sensor which senses a reflective portion at the end of the tape. The marker data method therefore requires the tape to be read as it is being rewound. The reflective portion method requires the tape to be specially manufactured to include a reflective portion or requires a reflective label to be affixed to the tape.

In accordance with this aspect of the invention, there is provided a tape drive machine operable to wind tape between a pair of reels and comprising means to detect when the tape does not cover part of one of the reels. Thus, the only requirement of the tape is that it is not light transmissive, which is generally the case. When the last turn of the reel is reached, the tape uncovers said part of the reel and the detection is then made.

Preferably, the detecting means comprises means to project a beam of light along a path which includes a passageway through said part of the reel, and means to determine when the light path is cut by the tape.

The last turn detection may be conveniently used with a means to control rotation of the reels in dependence upon the detection made by the detection means.

This aspect of the invention is preferably used in conjunction with the beginning of tape detection method described above at Section 1.7.

Various combinations of the above described aspects of the invention may, of course, be embodied in the same machine.

## 2. LIST OF DRAWINGS

Specific embodiments of the invention will now be described by way of example with reference to the accompanying drawings, in which:

Figures 1A and 1B are side views illustrating part of a tape drive mechanism;
Figure 2 is a schematic illustration of a recording head indexing mechanism;
Figures 3A to 3E illustrate the operation of the recording head;

Figure 4 is a sectional view through a motor;
Figure 5 is a plan view of the winding arrangement of the motor;
Figure 6 is a side view of the winding arrangements;
Figures 7 and 8 are sectional views of the winding arrangement taken along the section lines 14-14 and 15-15, respectively, as shown in Figure 5.
Figure 9 is a block diagram illustrating the manner of control of the motor;
Figure 10 is a schematic diagram illustrating a tape sensing arrangement;
Figure 11 shows a photo-sensor array used in the arrangement of Figure 10;
Figure 12 shows an alternative photo-sensor; and
Figure 13 is a sectioned elevation of a take-up reel showing an last turn sensor.

## 3. DESCRIPTION OF THE EMBODIMENTS

### 3.1 Head Indexing

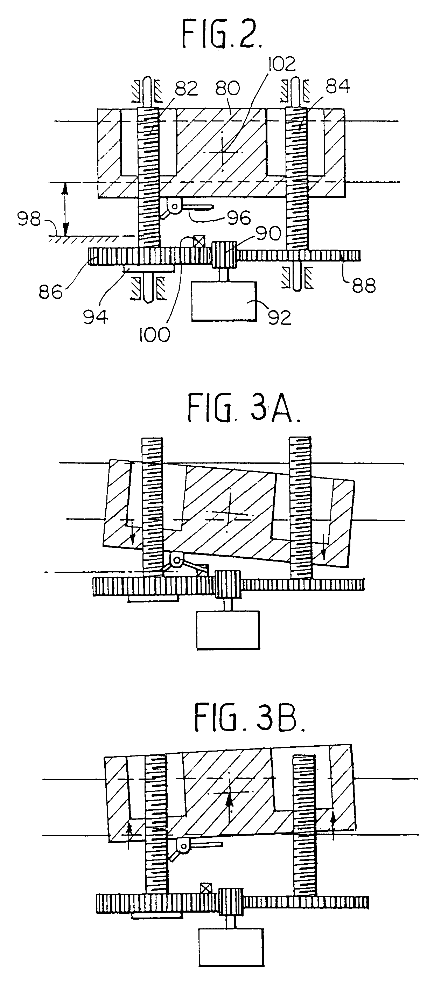

Referring now to Figure 2, there is illustrated schematically an arrangement for indexing a tape head across the width of a magnetic tape, and also for adjusting the azimuth angle of the head.
The head is mounted on a head mounting plate 80, which in turn is mounted on two parallel screws 82, 84. Gears 86, 88 are mounted on the screws and are driven by a common pinion 90 on a motor 92, such as a stepper motor or a DC motor and encoder. The gear 88 is directly attached to the screw 84. However, a backlash device 94 is provided between the gear 86 and its corresponding screw 82 so that the gear 86 can rotate through an angle of, for example, 30 degrees, without causing any rotation of the screw 82. Also mounted on the plate 80 is a pivoted stop lever 96, one end of which can engage a reference surface 98, and the other end of which can engage a stop pin 100 provided on the gear 86.

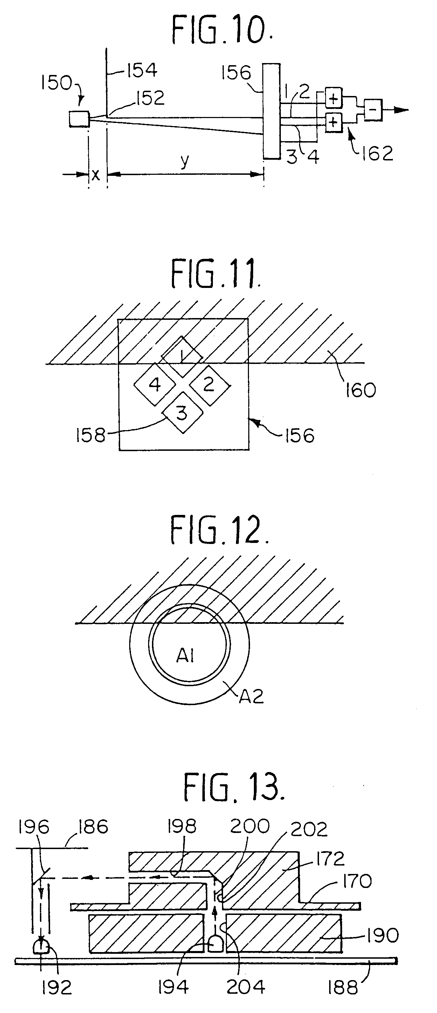

The operation of the mechanism will now be described with reference to Figures 3A to 3E. During initialisation of the tape drive machine, the motor is rotated to move the head plate 80 down the screws 82, 84 until the stop lever 96 engages the reference surface 98 and causes the other end of the stop lever 96 to swing into the path of the stop pin 100 and thus stall the motor. This situation is shown in Figure 10A. During this operation, the backlash in the backlash device 94 will be taken up. Friction between the drive screw 82 and head mounting plate 80 ensures that motor 92 removes all backlash before the drive screw 82 moves, and prevents displacement of the head by vibrations.

Taking the example of a simple case, in which the same azimuth angle is used for movement of the tape in either direction, the number A of degrees of rotation of the stepper motor required to move the head mounting plate 80 from the initialisation position to the desired azimuth angle is remembered by a controller for the motor. If, from the position shown in Figure 3A, the motor is caused to rotate by A degrees, then the screw 84 will rotate to raise the right hand side of the head plate 80. However, the number B of degrees of rotation of the motor necessary to take up all of the backlash in the backlash device is chosen to be greater than the number of degrees A, and therefore the screw 82 will not rotate. Therefore, from the initialisation position shown in Figure 3A, rotating the motor by A degrees will move the head plate 80 so that the head is aligned with the first track on the tape and the azimuth angle is correct.

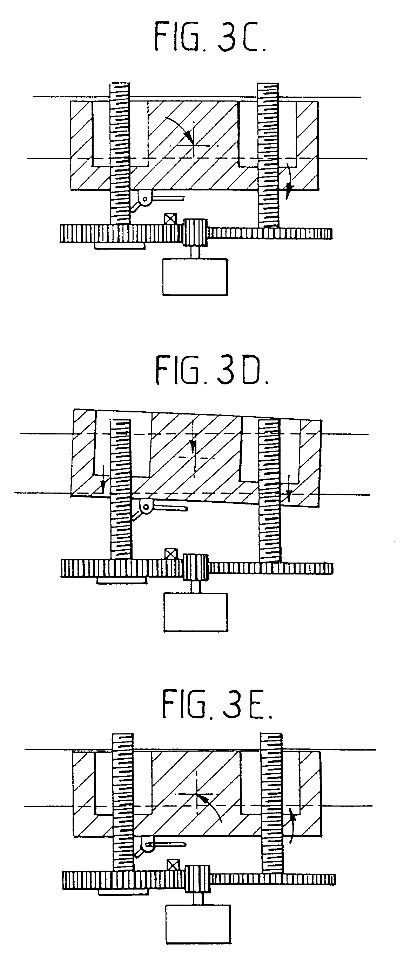

The controller for the motor is also programmed to remember the number I of degrees of rotation to move the head from one track to the next track. From the position in which the head is correctly aligned on the first track, if it is desired to move the head to the third track, firstly the motor is rotated B-A steps to take up the remainder of the backlash in the backlash device 94, only the screw 84 being rotated during this operation. Rotation of the motor is continued for a further 2 x I degrees, during which time both screws 82, 84 rotate, and the screw 82 is brought to the desired position. This situation is shown in Figure 3B. Then, the motor is rotated in the opposite direction by B-A degrees, causing only screw 84 to rotate due to the backlash device 94, and bringing the head plate to the desired azimuth angle as shown in Figure 3C.

If it is then desired to move the head in the opposite direction, for example by one track from track three to track two, firstly the motor is rotated by B degrees to take up the backlash in the backlash device 94 and to cause only screw 84 to rotate. Rotation of the motor by 1 x I degrees is then carried out to cause both screws 82, 84 to rotate and to bring screw 82 to the desired position, as shown in Figure 3D. The motor is then rotated in the opposite direction by A degrees to cause only screw 84 to rotate and to bring the head plate 80 to the desired azimuth angle, as shown in Figure 3E.

It will be appreciated that a more sophisicated control arrangement can be utilised so that differing azimuth angles can be set, depending on the direction of movement of the tape. Furthermore, the azimuth angle of the head may be easily adjusted by storing a different value of A to be used by the controller for the stepper motor 92. Furthermore, other methods to establish datums can be used.

Referring back to Figure 2, the centre of the head with respect to the mounting plate 80 is denoted by reference numeral 102, part way between the screws 82, 84. Therefore, with varying azimuth angles, the position of the head across the width of the tape will also be altered slightly. This can be compensated for by introducing an offset into the position of the screw 82 between the initialisation position, shown in Figure 3A and the position of the screw 82 used for reading the first track, and by varying this offset in dependence upon the set azimuth angle of the head. Alternatively, the head may be mounted on the mounting plate 80 so that it is aligned with the screw 82. It should be noted that the variations in azimuth angle shown in Figures 3A to 3E have been exaggerated for the purposes of clarity.

### 3.2 Tape Drive Motor

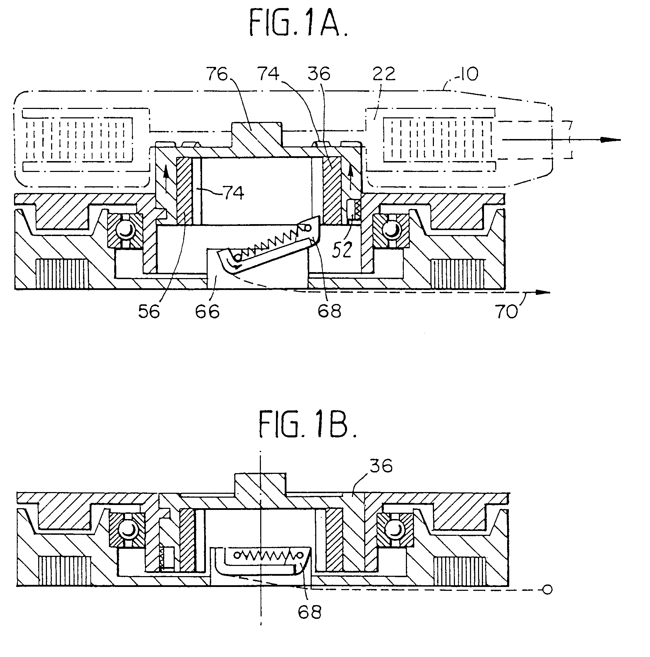

Referring now to Figures 1A, 1B and 4 to 7, there follows a description of a motor for use in a tape drive machine as described more fully in patent application WO-A-89/11148. The rotor 42 of the motor comprises a cylindrical member 44, and an annular flange 104 extending radially outwardly from the cylindrical member 44 at the upper end thereof. The inner raceway of a ball bearing 106 encircles the cylindrical member 44. The stator 108 of the motor comprises a back iron 110 formed from a strip wound in a spiral. Eighteen winding coils 112 are disposed on the back iron 110 in a manner described below, and the assembly of the windings and back iron is potted in a reinforced thermosetting plastics resin to form an annular stator. A rebated bearing mounting ring 114 is provided internally of the stator assembly, and the other raceway of the single ball bearing 106 is fitted into the rebate of the ring 114.

A plurality of magnets 116 are secured to the underside of the flange 104 of the rotor to provide twelve alternating north and south poles confronting the arrangement of winding coils 112. The windings are controlled by a brushless DC motor controller integrated circuit to produce a rotating magnetic field, and accordingly the rotor 42 rotates synchronously with the magnetic field.

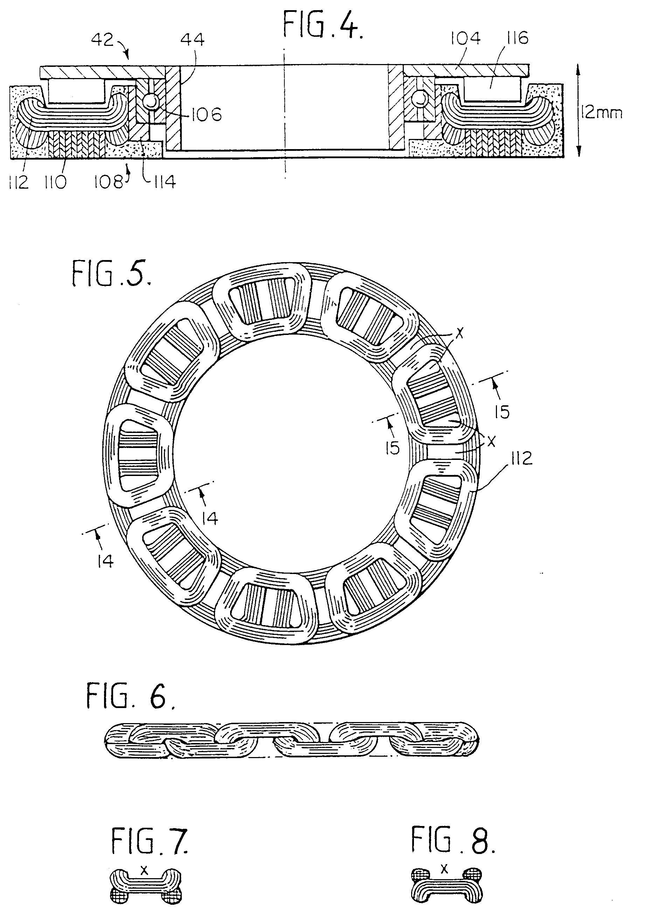

It will be noted from Figure 4 that the motor has a small axial height, by comparison to its diameter, and typically the height of the motor would be 12mm for the application in the tape drive machine mentioned above. The design of the low height of the motor is facilitated by the use of a single bearing for mounting the rotor to the stator. Furthermore, an important advantage of the motor is that there is an axial component to the magnetic field between the rotor and the stator, and this axial component tends to take up any play in the bearing 106, without the necessity of any other means such as a spring or shims.

The diameter of the bearing assembly is a substantial proportion, such as at least one quarter and more preferably at least about one half of the diametrical size of the motor. In one example, the balls of the bearing follow a path of diameter 52mm and the stator assembly has an outside diameter of 98mm. Furthermore, the balls of the bearing assembly are preferably of small diameter relative to the diameter of the path which they follow, for example in the ratio of 1:14.8. In the example where the balls follow a path of diameter 52mm, the balls are each of diameter 3.5mm. By making the bearing of large diameter with balls of small diameter, the amount of tilt of the rotor due to play in the bearing is small.

### 3.3 Stator Construction

Referring specifically to Figures 5 to 8, the arrangement of the winding coils 112 is illustrated. Eighteen such coils are provided and they are interconnected in a three-phase, twelve-pole arrangement. In construction of the coil assembly, each coil is initially substantially planar. The coils are laid on an annular former in two tiers in the arrangement shown in Figure 5 , and a further annular former is placed on top of the upper tier of coils. The width of the annular former is slightly less than the distance between the two circumferential portions of each coil. The two formers are then pressed together in a press in order to deform the coils so that each generally radial portion x of each coil is forced into the space between the generally circumferential portions of the adjacent coil, and thus the sections as shown in Figures 7 and 8 are obtained. Each coil is covered with a heat-curable lacquer, and after the pressing operation the coil assembly is heated in order to cure the lacquer coating and thus bond the coils together in a rigid ring. This manufacturing process therefore provides a compact and strong winding assembly.

The stator assembly may be formed from three or more tiers pressed together, rather than two tiers.

### 3.4 Detection of Tape Edge

Referring to Figures 10 to 12, an arrangement is illustrated for detecting one of the edges of the magnetic tape. A laser diode is disposed to one side of one edge 152 of the tape 154. The diode 150 emits a beam of light which, at the diode, is very narrow in one direction, typically 1.5 microns, and this narrow direction is arranged to correspond with the width direction of the tape. The beam of light diverges from the diode 150, and the diode is arranged so that the tape 154 partially cuts the beam of light. The light beam is directed to a photo sensor array 156. The distance x between the diode 150 and the tape 154 is chosen to be substantially less than the distance y between the tape 154 and the photo sensor array 156. In one example, the distance x is 1mm, and the distance y is 30mm.

Referring specifically to Figure 11, the photo sensor array 156 comprises four photo sensitive elements 158, arranged in a two-by-two array, with the diagonals parallel to and perpendicular to the edge of the shadow 160 of the tape 154 cast by the diode 150. An arithmetic circuit 162 serves to sum the outputs of the sensor elements 1, 3, to sum the outputs of the elements 2, 4 and to provide an output dependent upon the difference between the two sums. The output therefore provides a measure of the transverse position of the tape and has a nominal zero value when the shadow of the edge 152 of the tape bisects the sensor elements 2, 4. Four sensor elements are used so that any offset in the output of each sensor element, which is likely to be the same for all four sensor elements, is self cancelling. The output from the arithmetic circuit 162 may be used in initially setting the position of the head of the tape drive. However, the output may also be dynamically used when indexing the head in the arrangement described above to compensate for any variations in the transverse position of the tape. Furthermore, in one arrangement which provides for movement of the head across the tape completely independently of azimuth adjustment of the head, the tape edge may be continuously detected and the head may be moved at any time to compensate for variations in the transverse position of the tape.

An alternative photo sensor 156 is illustrated in Figure 12. In this case, only two sensor elements are used. Sensor element A1 is in the form of a disc, and sensor element A2 is in the form of a ring concentric with the element A1 and of the same area. A simpler arithmetic circuit can then be utilised which merely provides an output dependent upon the difference between the outputs of the sensor elements A1, A2.

In the above arrangement, by virtue of the large ratio of the distance y to the distance x, movement of the edge of the tape relative to the diode 150 and the photo sensor 156 produces a greatly amplified movement of the edge of the shadow 160 cast by the tape 154. Accordingly, the arrangement can be used to determine the position of the edge of the tape to very fine tolerances.

### 3.5 Detection of Beginning and End of Tape

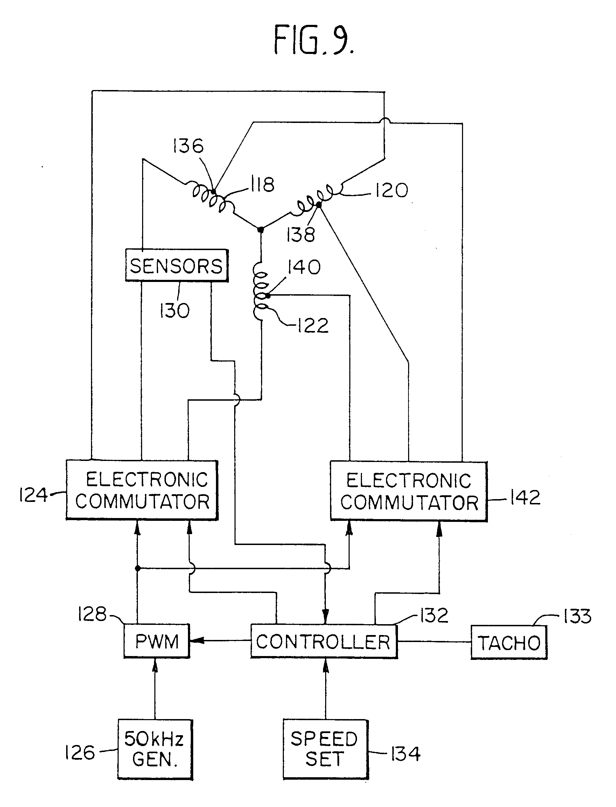

Referring to Figure 9, there is shown a manner of controlling the motor. The windings of the motor are arranged as three phases 118, 120, 122 in a star configuration. Each winding is connected to an output of an electronic commutator circuit 124. A generator 126 supplies a 50kHz signal which is modulated by a pulse width modulator 128, and the pulse width modulated signal is supplied to the electronic commutator 124 for switching between the three phase outputs of the commutator 124. Hall-effect sensors 130 responsive to rotation of the rotor of the motor supply synchronising signals to a controller 132, and the controller 132 provides synchronising signals to the commutator 124 so that the pulse width modulated signal is switched to the respective phases of the windings at the appropriate times. A speed setting device 134 provides a signal to the controller 132, and the controller 132 provides a signal to the pulse width modulator 128 dependent upon the set speed and the actual speed derivable from the output of a tachometer B which can be fitted either to the motor or placed in the tape path to measure the speed, so that the pulse width is varied to regulate the speed of the motor.

It is necessary in a tape drive machine to be able to detect that the take-up reel is nearly empty, so that the motors can be halted before the end of the tape is reached, in order to prevent undue straining of the tape, or the leader block being forced out of take up reel and past the head assembly.

Referring to Figure 9, the tachometer 133 produces a series of pulses, for example 360 pulses for each revolution of the tachometer, which are counted by the controller 132. The controller 132 also responds to an output from one of the Hall-effect sensors 130 for the take-up reel to reset the count once per revolution of the take-up reel. It will be noted that the radius R of the body of tape on the take-up reel can be determined by the value n of the count immediately before the count is reset by the equation $R = n.r/N$, where r is the radius of the tachometer 133 and N is the number of pulses produced per revolution of the tachometer 133. During fast or slow reverse winding, the controller 132 is operable repeatedly to determine whether the value n is less than a predetermined value indicating that the radius of the body of tape on the take-up reel is only slightly greater than the radius of the take-up reel, and upon such a determination is operable to stop the winding process. Thus, winding is stopped just before the beginning of tape is reached.

In a modification of the above process, the controller is also operable repeatedly to determine whether the value n is greater than a further predetermined value indicating that the radius of the body of tape on the take-up reel has reached a maximum permissible value, and to stop a forward winding process upon such a determination. The maximum permissible radius is chosen to be somewhat less than the radius which would be produced if all of the tape were wound onto the take-up reel.

Since the value of the maximum diameter of the body of tape on the take-up reel depends on the length and thickness of the tape, which may vary from one tape cartridge to another, in an alternative preferred modification the controller determines the end of tape using one of the Hall-effect sensors of the supply reel motor and can therefore determine when the radius of the body of tape remaining on the supply reel has decreased to value only slightly larger than the radius of the supply reel.

### 3.6 Last Turn Sensor

Referring to Figure 13, a printed circuit board 188 for carrying electronic components of the machine is provided beneath a take-up motor 190 which drives a take-up reel 170. An infrared source 194 is mounted at one position on the printed circuit board 188, and an infrared detector 192 is mounted at another position. The infra-red source 194 projects a beam upwardly through a passageway 204 in the motor and a passageway 202 in the boss 172 to a reflective surface 200. The beam is reflected by the surface 200 into a part-chordal passageway 198 in the boss 172 of the take-up reel 170, and passes to a mirror 196 provided on a mounting plate 186, which directs the beam downwardly through onto the infra-red detector 192. The beam will only follow this path when the take-up hub 170 is in a position in which the passageway 198 is aligned with the mirror 196 and when the passageway 202 is in register with the passageway 204 and when there is slightly less than one turn of tape on the take-up reel 170. If there is more tape than this, then it will be appreciated that the exit from the passageway 198 is covered by the tape.

It will be appreciated that the above arrangement enables the electronic components, that is the infra-red source and infra-red detector to be mounted directly on a main circuit board 188 of the tape drive machine.

### Claims

1. A data head indexing system comprising a reversible motor, and first and second mechanisms driven by the motor for indexing first and second portions, respectively, of the head across a recording medium, the first mechanism incorporating a backlash device so that, as the mechanisms drive the head in unison, the head is bodily moved across the recording medium, but so that, as the backlash of the backlash device is being taken up, the second mechanism alone moves the first portion of the head to adjust the azimuth angle of the head relative to the recording medium.

2. A system as claimed in claim 1, further comprising means for controlling the motor, the control means being operable when moving the head in one direction to cause the motor to drive the second mechanism in one direction and take up the backlash in the first mechanism and then to drive the first and second mechanism in unison in said one direction to move the head in said one direction, and then to drive the second mechanism in the opposite direction whilst there is backlash in the first mechanism to achieve a desired azimuth angle of the head.

3. A system as claimed in claim 2, wherein the control means is operable when moving the head in the opposite direction to cause the motor to drive the second mechanism in the opposite direction and take up backlash in the first mechanism and then to drive the first and second mechanisms in unison in said opposite direction to move the head in said opposite direction, and then to drive the second mechanism in said one direction whilst there is backlash in the first mechanism to achieve a desired azimuth angle of the head.

4. An electric motor comprising a stator and a rotor, the rotor being mounted to the stator by a single bearing assembly having rolling elements, the bearing assembly having a diameter which is a substantial portion of the overall diametral size of the motor, and the arrangement being such that, in operation, the magnetic field acting between the stator and the rotor has a component in the axial direction of the rotor, so that the rotor exerts an axial force on the bearing.

5. A motor as claimed in claim 4, wherein the bearing is a ball bearing assembly.

6. A motor as claimed in claims 4 or 5, wherein the rotor is annular and an axially movable drive hub is mounted within the rotor.

7. A method of constructing a stator winding assembly for a motor, comprising the steps of:

arranging a plurality of winding coils in a first ring as a first tier;

arranging a further plurality of winding coils in a second ring as a second tier disposed on the first tier so that the windings of the second tier are angularly off-set relative to the windings of the first tier;

pressing the two tiers together to deform the windings so that portions of the winding of each tier are interleaved with portions of the windings of the other tier; and

securing the windings together.

8. A method as claimed in Claim 7, further comprising the steps of coating the winding coils with a heat curable material prior to arranging the coils in the tiers, and wherein the securing step includes the step of heating the winding assembly to cure the heat-curable material.

9. A stator winding assembly constructed according to the method of claim 7 or 8.

10. A tape drive machine comprising a head, means to drive a tape from one reel to another past the head, means to detect the position of an edge of the tape in a direction transverse to the tape at a location adjacent the head and means to adjust the transverse position of the head and the tape relative to each other in dependence upon the sensed edge position the detecting means comprising means to project a beam of light across the edge of the tape, and a light sensor arranged to sense the beam and such that the tape casts a shadow on the sensor, the sensor producing an output signal dependent upon the position of the shadow on the sensor, the beam having a small dimension in the direction transverse to the tape at the source of the beam and diverging from the source.

11. A machine as claimed in claim 10, wherein the edge of the tape is disposed closer to the source than the sensor.

12. A machine as claimed in claim 10 or 11, wherein the source of the beam is a laser diode.

13. A machine as claimed in any of claims 10 to 12, wherein the sensor includes means to compensate for variations in the intensity of the beam.

14. A tape drive machine operable to wind tape between a pair of reels and having:

means to provide a signal indicative of the linear speed of the tape between the two reels;

means to provide a signal indicative of the angular speed of one of the reels; and

means to determine from the tape speed signal and the reel speed signal, when less than a predetermined amount of tape remains on said one reel.

15. A machine as calimed in claim 14, wherein the linear speed indicating means comprises a tachometer roller which is turned by the tape, and means to provide a first pulsed signal of frequency proportional to the speed of the tachometer roller, wherein the reel speed indicating means produces a second pulsed signal of frequency proportional to the speed of the reel, and wherein the determining means is operable to count the number of pulses of the first signal between successive pulses of the second signal.

16. A machine as claimed in claim 14 or 15, further comprising means to provide a signal indicative of the angular speed of the other reel, and means to determine, from the tape speed signal and the other reel speed signal, when a predetermined amount of tape remains on said other reel.

17. A machine as claimed in any of claims 14 to 16 and further comprising means to control rotation of the reels in dependence upon result of the determination(s) made by the determining means.

18. A tape drive machine operable to wind tape between a pair of reels and comprising means to detect when the tape does not cover part of one of the reels.

19. A machine as claimed in claim 18, wherein the detecting means comprises means to project a beam of light along a path which includes a passageway through said part of the reel, and means to determine when the light path is cut by the tape.

20. A machine as claimed in claim 18 or 19 and further comprising means to control rotation of the reels in dependence upon the detection made by the detection means.

21. A machine as claimed in any of claims 18 to 20 and further including the features of any of claims 14 to 17.

# FIG.1A.

# FIG.1B.

# FIG.2.

# FIG. 3A.

# FIG. 3B.

## FIG. 3C.

## FIG. 3D.

## FIG. 3E.

## FIG.4.

## FIG.5.

## FIG. 6.

## FIG.7.

## FIG.8.

# FIG.9.

## FIG.10.

## FIG.11.

## FIG.12.

## FIG. 13.